# EUROPEAN PATENT SPECIFICATION

(11) **EP 3 650 426 B1**
(45) Date of publication and mention of the grant of the patent: **28.12.2022**
(21) Application number: 19206877.3
(22) Date of filing: 04.11.2019
(51) Int. Cl.: C04B 28/04, B32B 5/02, B32B 7/12, B32B 13/02, B32B 13/14, E21D 11/00, E21D 11/08, C04B 111/00

(54) **PANEL FOR THE ILLUMINATIVE CLADDING OF TUNNELS OR FOR THE EXTERNAL OR INTERNAL CLADDING OF BUILDINGS AND PROCESS FOR THE PRODUCTION THEREOF**
PANEEL FÜR DIE LEUCHTENDE VERKLEIDUNG VON TUNNELN ODER ZUR AUSSEN- ODER INNENVERKLEIDUNG VON GEBÄUDEN UND VERFAHREN ZUR HERSTELLUNG DAVON
PANNEAU DE REVÊTEMENT D'ILLUMINATION DE TUNNELS OU DE REVÊTEMENT EXTERNE OU INTERNE DE BÂTIMENTS ET SON PROCÉDÉ DE PRODUCTION

(30) Priority: 06.11.2018 IT 201800010076
(43) Date of publication of application: 13.05.2020
(73) Proprietor: Societa'Italiana Lastre S.p.A., 25028 Verolanuova (Brescia) (IT)
(72) Inventor: TEPPA, Franco, 25028 Verolanuova (BS) (IT); FRANCESCHETTI, Roberto, 25028 Verolanuova (BS) (IT)
(74) Representative: Zambardino, Umberto

(56) References cited:
- WO-A2-2009/111302
- JP-A- H06 248 881
- US-A1- 2009 272 058
- US-A1- 2018 066 430
- US-B2- 8 273 415

## Description

### Field of application

According to its more general aspect, the present invention relates to the illuminative cladding of tunnels, in particular road tunnels, and to the external cladding of buildings.

In particular, the present invention relates to a panel comprising a rear reinforcement and a fiber-cement slab joined to said reinforcement, and to a process for the production thereof.

The present invention also relates to the use of the aforementioned panel for the illuminative cladding of tunnels, in particular road tunnels, and for the cladding of external and/or internal facades of buildings.

### Prior art

As is known, tunnels designed for road traffic are provided on the side walls with an internal illuminative cladding which usually consists of a plurality of panels aligned with each other and separated by expansion joints in order to satisfy various performance and safety requirements in connection with the vehicle traffic passing through said tunnels. These requirements include in particular the fire reaction designed to avoid or limit the propagation of fire inside the tunnel in the event of a fire breaking out, a suitable internal luminosity inside the tunnel with uniform lighting levels, a satisfactory acoustic comfort with limitation as far as possible of the noise generated by the vehicle traffic, the prevention and limitation of infiltration or actual inflow of water inside the tunnels, and a suitable corrosion resistance of the panels.

The choice of materials and technology for installation of the cladding panels varies depending on the specific requirements in terms of performance and safety as well as durability and cost investment.

One solution proposed by the prior art is that of cladding the side walls of the tunnels with a plurality of panels which have a porcelain-enameled steel slab or a slab of ceramic material. These panels generally ensure a satisfactory acoustic comfort and fire reaction, but have the drawback of a limited resistance to impacts on the porcelain-enameled or ceramic material part and a limited resistance to stresses (loads) due to the repeated positive and negative pressures exerted on the panels by the passing movement of motor vehicles, the magnitude of said stresses depending on the size and speed of said motor vehicles as well as the distance of the travel lane from the wall which is lined with these panels.

Therefore, the aforementioned panels have a limited durability since they are subject to cracks and/or breakages during their working life which may result in pieces of the panels becoming detached from the side walls of the tunnel, thus endangering the safety of the tunnel which is passed through by the vehicle traffic.

Furthermore, it should be noted that the aforementioned panels have a relatively high cost which negatively affects both the investment costs for the internal cladding of the tunnel and the costs of replacing the cracked and/or broken panels in order to restore the necessary safety conditions inside the tunnel.

Another solution employed by the prior art is that of forming the internal cladding of tunnels using metal panels, for example stainless steel or aluminum panels, which are painted on the front with a highly reflective material, such as a white paint.

These panels have good durability characteristics, but do not always ensure a satisfactory acoustic comfort and moreover are prone to deformation. Furthermore, it should be said that painted panels usually maintain their original color for relatively short periods of time and this results in a gradual reduction in the internal luminosity of the tunnel and the need to perform periodic painting in order to re-establish the luminosity conditions inside the tunnel in accordance with the required safety standards.

WO 2009/111302 discloses a cementitious armor panel assembly including cementitious armor panel with ballistic and blast resistant properties attached to a frame structure to produce a protective structure.

US 8273415 discloses a reinforcement sheet for a cementitious board including, a thin, water vapor porous layer of glass fibers bonded together by a cured binder to provide binder coated glass fibers, and a hydrophilic coating material on the binder coated glass fibers, the hydrophilic coating material being soluble and transferable to slurry water of a cementitious compound, and then being volatile in the slurry water to dissipate by evaporation at an elevated temperature and time duration at which the cementitious compound is dried to form a cementitious board.

US 2009/272058 discloses a reinforced building element including:a rigid cementitious substrate having a first face; and a layer of reinforcing material, wherein said reinforcing material is adhered to said first face of said rigid substrate using a radiation curable resin.

US 2018/066430 discloses a cementitious composite for in-situ hydration including a first layer, a second layer spaced from the first layer, and a cementitious mixture disposed between the first layer and the second layer.

JP H06 248881 discloses an interior panel for a tunnel composed of a glass fiber reinforced concrete substrate and a coating layer made of a fluorine-based resin paint formed on at least the surface of the substrate.

The main object of the present invention is therefore that of providing a panel for use in the internal cladding of tunnels, in particular road tunnels, and also for the external and/or internal cladding of buildings, said panel having improved performance and functional characteristics, in particular as regards impact resistance, as well as a high durability, such as to overcome the drawbacks mentioned above with reference to the prior art.

A further object of the present invention is to provide a panel as described above which may be produced on an industrial scale at a relatively low cost and which requires lower investment and maintenance costs for the uses mentioned above.

### Summary of the invention

These objects are achieved by a panel for the illuminative cladding of tunnels or for the external or internal cladding of buildings, comprising a fiber-cement slab and a rear reinforcement in the form of a mineral fiber mesh joined to the rear face, in use, of said fiber-cement slab by an adhesive, characterized in that said adhesive is applied onto said fiber-cement slab in an amount ranging between 50 g/m² and 150 g/m².

According to one embodiment of the invention, the reinforcement consists of a glass fiber mesh. Preferably, the reinforcement mesh, for example a glass fiber mesh, is treated with an anti-alkaline sizing.

According to another embodiment of the invention, the mesh reinforcement extends along the entire area of said slab face. In the present invention, the mesh reinforcement is glued onto the rear face, in use, of greater area of the fiber-cement slab.

According to a further embodiment of the invention, the adhesive is a polyurethane-based thermoreactive adhesive.

The aforementioned objects are also achieved by a process for the production of a panel as described above. This process comprises the steps of:
- providing a fiber-cement slab;
- applying with heat a thermoreactive adhesive onto the rear face, in use, of the fiber-cement slab;
- applying a mineral fiber mesh onto said rear face, in use, of the fiber-cement slab on which the adhesive has been applied with heat; and
- gluing said mineral fiber mesh to said rear face, in use, of the fiber-cement slab.
characterized in that said adhesive is applied onto said fiber-cement slab in an amount ranging between 50 g/m² and 150 g/m², in particular 100 g/m².

The present invention also relates to the use of the panel described above for the internal illuminative cladding of tunnels, in particular road tunnels.

The present invention also relates to the use of the panel described above for the external and/or internal cladding of buildings.

Further characteristic features and advantages of the present invention will become clear from the detailed description and the example below, which are provided by way of a non-limiting illustration.

### Detailed description

In the present description, the indication of number ranges includes all the values and fractions within the respective ranges as well as the end values.

In the present description, the term "fiber-cement slab" refers to a flat, usually rectangular, element in the form of a slab, panel or sheet made of a material comprising synthetic and/or natural fibers and cement. The fiber-cement slab has two main larger-area surfaces or faces situated opposite each other and may be used in general for the cladding of the internal and external facades of buildings or structures. In the present invention the fiber-cement slab is used for the internal cladding of tunnels, in particular road tunnels.

The fiber-cement slab may be obtained using processes which are conventional as such and which involve the formation of a mixture comprising water, fibers and cement followed by a hardening process. The fibers may be natural organic fibers (typically cellulose fibers) or synthetic organic fibers such as, by way of a non-limiting example, polyvinyl alcohol, polyacrylonitrile, polypropylene, polyamide, polyester, polycarbonate, polyethylene, etc.). The cementitious material or cement may be, by way of a non-limiting example, Portland cement, cement with a high alumina content, iron Portland cement, trass cement, slag cement, pozzolana cement, gypsum, calcium silicates, etc. The mixture may contain further additives such as anti-foaming agents, flocculants or other additives, for example pigments for obtaining a so-called mass colored product.

In particular, coloring of the fiber-cement slab may be adjusted by means of the choice of the pigments introduced into the aforementioned mixture, such as pigments able to impart a white color to the slab (for example in the case where the slab is used for the internal cladding of a tunnel) or pigments able to impart another color depending on specific requirements also of an aesthetic nature (for example in the case where the slab is used for the cladding of external or internal facades of buildings). Alternatively, coloring of the fiber-cement slab, white or another color, may be achieved by applying a paint of the desired color onto the surfaces of the fiber-cement slabs.

The mixture comprising fibers and cement is pressed and hardened in a manner conventional per se for example by means of air hardening or heat hardening, for example by means of treatment in an autoclave under pressure at relatively high temperatures and in the presence of steam.

Preferably, the mixture comprising fibers and cement is hardened by means of treatment in an autoclave.

At the end of hardening, a fiber-cement product which has a significant moisture content, usually of between 10% and 15% by weight of the weight of the dry product, is obtained, where "weight of the dry product" is understood as meaning the weight of the product when subjected to drying at 105°C in a fan-assisted oven until a constant weight is obtained. The fiber-cement product is cut to a predetermined length so as to form fiber-cement slabs with predetermined dimensions.

The slabs for the use considered in the present invention have preferably a thickness of between 5 and 12 mm and a density of between 1000 and 2000 kg/m³. They may also be subjected on their front surface, in use, to a surface treatment with a hydrophobic transparent varnish or a varnish which is transparent or colored with suitable pigments, in particular with pigment able to reflect the light and provide whiteness (white).

In accordance with the present invention, a reinforcement consisting of a mineral fiber mesh is joined to the rear face, in use, of the fiber-cement slab.

Suitable natural fibers include ceramic fibers, mineral fiber and glass fiber. Preferably, the mesh reinforcement is made using glass fiber. Preferably, the mesh reinforcement extends substantially along the whole area of the mounting face of the fiber-cement slab.

The mesh reinforcement consisting of a mineral fiber, for example glass fiber, may be obtained by weaving yarns of the selected mineral fiber or the selected mineral fibers, in particular glass fiber, using procedures which are conventional per se. The mesh reinforcement is preferably lined with a sizing which provides the product with dimensional stability and tear-resistance and also ensures the necessary protection against attack by alkali. The aforementioned anti-alkaline coating may be provided using suitable resins known to the person skilled in the art.

Preferably, the reinforcement mesh, for example the glass fiber mesh, has a mesh opening with dimensions in the range of 1-5 mm x 1-5 mm and a surface density of between 0.05 kg/m² and 0.1 kg/m².

According to an embodiment of the invention, the mesh reinforcement is glued to the mounting face of the fiber-cement slab by means of an adhesive.

Generally speaking, the adhesive may be any resin which is able to bond firmly together the reinforcement and the slab and which has a suitable durability and resistance to chemical and atmospheric agents.

The adhesive may be conveniently chosen from among thermoreactive resins (hot melts) and mixtures thereof. Preferably, the adhesive consists of at least one polyurethane-based resin (PUR hot melt). According to the invention, the gluing adhesive is used in an amount ranging between 50 g/m² and 150 g/m², and in particular equal to 100 g/m².

The use of a smaller amount of adhesive, in particular an amount less than 50 g/m², may reduce the gluing force between the reinforcement and the fiber-cement slab to a value which is unsatisfactory. On the other hand, the use of a large amount of adhesive, in particular an amount of more than 150 g/m², may increase the gluing force, but at the same time may reduce in an undesirable manner the fire-reaction performance of the panels. Therefore, the optimum solution is to use an amount of adhesive ranging between 50 g/m² and 150 g/m², and in particular equal to 100 g/m², for the construction of the panels according to the invention.

The application of the mesh reinforcement onto the fiber-cement panel may be performed using gluing techniques which are known per se to the person skilled in the art. In particular, according to an embodiment of the invention, firstly a thermoreactive adhesive is applied with heat onto the rear face of the fiber-cement slab, then a mineral fiber mesh is applied onto said face of the fiber-cement slab, thus gluing the mineral fiber mesh to the face of the fiber-cement slab.

The hot-application of the thermoreactive adhesive onto the rear face of the fiber-cement slab may be performed by means of spreading, spraying, roller application or other similar systems. In particular, in the case of roller application, the adhesive, for example in the form of sticks, may be fed onto the rear face of the fiber-cement slab from a hopper and then uniformly applied over the whole surface of said rear face by passing the fiber-cement slab underneath a heated roller kept at a temperature such as to melt the adhesive (for example a temperature of 100-150°C depending on the selected adhesive).

After application of the mineral fiber mesh, gluing may be performed or completed by pressing together the fiber-cement slab and the mineral fiber mesh with the adhesive placed in between them, for example by means of passage between a pair of oppositely arranged rollers or functionally equivalent systems.

It has been found that the panels according to the invention have good performance characteristics, which make them suitable for use in the internal cladding of tunnels, in particular road tunnels, and also for the cladding of external and/or internal facades of building, as well as an optimum durability.

In particular, as will be seen more clearly below in the present description, the panels according to the invention have surprisingly a high resistance to the impacts and stresses typical of the positive and negative pressure cycles associated with vehicle traffic inside a tunnel, without substantial damage or release of fragments occurring. At the same time, the panels according to the invention have good light reflection and fire-reaction characteristics, ensure satisfactory acoustic comfort and have an optimum corrosion resistance.

Therefore, the panels according to the invention may be effectively used for the internal cladding of tunnels, in particular road tunnels, while satisfying the functionality and safety requirements applicable to such an application, in particular to the side walls of the tunnel. In this context, owing to their high impact and stress resistance and their high corrosion resistance, the panels according to the invention have a greater useful working life (durability) during which they retain substantially unaltered their original characteristics.

The same or similar advantages are achieved by the panels according to the invention also in the case where they are used for the cladding of external and/or internal facades of buildings.

This allows advantageously also a significant reduction in the costs of maintenance of the internal cladding of the tunnels, for example for replacement of damaged or broken panels, since, if the panels according to the invention are used, maintenance of the internal cladding of the tunnels may be programmed at much longer time intervals.

It should also be noted that the panels according to the invention have much lower unit costs compared to those of conventional porcelain-enameled steel or metal (steel or stainless steel) panels since they use lower-cost components and may be installed in a manner similar to conventional panels. Consequently, therefore, use of the panels according to the invention advantageously also results in a reduction of the investment costs for performing the cladding of a tunnel compared to the use of conventional panels, as indicated above for this application.

Installation of the panels according to the invention inside a tunnel may be performed using techniques which are conventional per se. For example, the panels according to the invention may be fixed onto a support consisting of a metal frame fixed beforehand to the inner walls of the tunnels. The frame may comprise a plurality of vertical uprights, which are suitably spaced apart at a distance substantially corresponding to the width of the panels and may be curved depending on any curvature of the inner walls of the tunnel where they are mounted, and horizontal cross-pieces which join together the uprights and have a grooved profile open at the top. The panels may be installed by engaging their bottom edge inside the groove of the respective cross-pieces and then fixing the panels to the respective vertical uprights by means of suitable fixing screws.

The present invention will now be described with reference to the non-limiting examples provided below with reference to the accompanying figure in which:

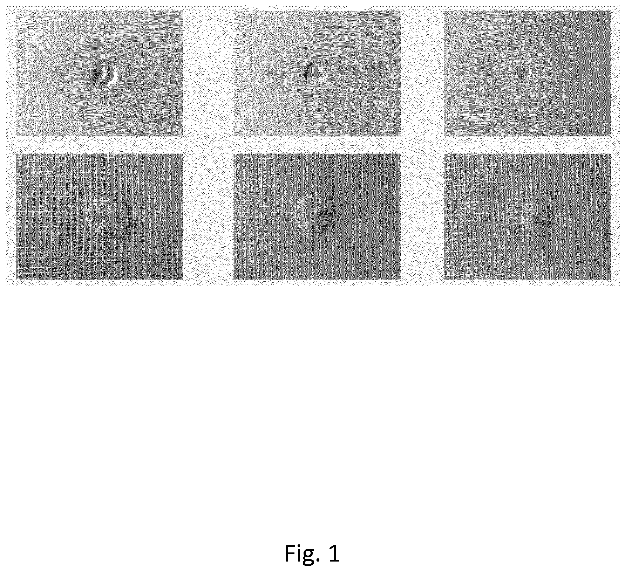

- Figure 1 shows images of the front side (top) and rear side (bottom) of three samples of panels according to the inventions after impact with a blunt object thrown at high speed.

### EXAMPLE 1

### Production of panels according to the invention

White-colored fiber-cement slabs with dimensions 1200 mm x 3000 mm, nominal thickness of 5 mm and density of 1600±50 kg/m³ were produced in a conventional manner. The fiber-cement slabs were hardened in an autoclave and the moisture content of the slabs after hardening was 10-15%. Moreover, the fiber-cement slabs thus obtained were treated superficially on the front face with a transparent acrylic varnish using conventional procedures.

A layer of polyurethane-based thermoreactive adhesive was supplied from a hopper onto the rear face of each fiber-cement slab and then uniformly distributed over this rear face by means of a heated roller kept at a suitable temperature so as to melt the adhesive. Then, a glass fiber mesh with anti-alkaline sizing having a mesh opening with dimensions of 4 mm x 5 mm and surface density of 0.073 kg/m² was applied onto said rear face of each fiber-cement slab. Then the fiber-cement slabs were compressed by passing them between oppositely arranged rollers so as to complete gluing between the fiber-cement slabs and the respective glass fiber meshes by means of the adhesive placed between them, thus obtaining a plurality of panels according to the invention.

### EXAMPLE 2

### Impact resistance tests

Three samples of panels obtained according to Example 1 with dimensions 500 mm x 500 mm were subjected to impact resistance tests in accordance with the standard NF F31-129 "Matériel roulant ferroviaire - Vitres de sécurité trempées" dated May 2013, using a series of aluminum projectiles according to paragraph 15.1.1.2 of this standard.

The test was carried out as stipulated in paragraph 15.1.1 of the standard NF F31-129 - except for the constructional nature of the sample indicated as glass - with the aim of checking the capacity of the mesh present on the rear of the sample to retain, without being perforated, objects thrown at high speed against the slab, such as stones or other blunt bodies, and of checking also whether any fragments were produced following the impact. The impact speed was 38-43 m/s.

As can be seen from Figure 1, in all the samples which underwent the test, a circular depression with a diameter of 25-28 mm and maximum depth of 4 - 4.5 mm was created on the front side which was exposed to the impact, while on the rear side there were no evident fissures in the mesh reinforcement. Furthermore the slabs of the samples which underwent the test did not release any fragments.

Therefore, owing to the presence of the mesh reinforcement, the panels according to the invention are able to retain, without being perforated, objects thrown at high speed against the slab and without the release of any fragments from the slab.

Impact tests were also carried out using a hard blunt body on samples of panels obtained according to Example 1 and having the dimensions indicated above. The tests were carried out as stipulated in the guide of the EOTA (European Organisation for Technical Approvals) ETAG 034-1:2012 dated April 2012, "Guideline for European technical approval of kits for external wall claddings - Part I: Ventilated cladding kits comprising cladding components and associated fixings", using for the impact hard bodies consisting of a steel ball weighing 500 g and 1000 g.

The tests were carried out as stipulated in paragraph 5.4.4.1 of the guide ETAG 034-1 with the aim of checking the resistance of the slab to impacts from hard objects and whether any fragments were released after the impact.

Each sample was mounted on the test bench and was subjected, in sequence, to an impact in predefined impact zones using a steel ball weighing 500 g allowed to fall from a height of 0.61m (impact energy 6J) and using a steel ball weighing 1000 g allowed to fall from a height of 1.02 m (impact energy 10 J).

All the impacts were obtained by allowing the striking bodies to fall along a pendular path, at zero initial speed, from a predefined height. The striking bodies were suspended by means of a rigid cable of negligible weight so that in the rest position they were situated in contact with the point where the impact was to take place. At the end of each impact the striking bodies were retained and prevented from rebounding back onto the sample.

At the end of the tests, the slabs of the samples examined did not reveal any cracks in the impact zones nor did they release any fragments after the impact.

Therefore the panels according to the invention also have a high resistance to the impacts of hard bodies without the release of any fragments from the slab.

### EXAMPLE 3

### Tests for resistance to positive and negative pressure cycles

A sample of a panel obtained according to Example 1 was installed in a test chamber connected to a system for generating a positive and a negative pressure.

The system was started and adjusted so as to generate a cyclical pressure of at least ± 1500 Pa inside the test chamber, said pressure corresponding to an opposite external pressure intended to simulate the fast passing movement of vehicles. The cycle time was 3.6 s. It is emphasized that this condition, allowing the sample a lot of time to be deformed, is much more severe than the real passing movement of a vehicle. The test was carried out for a total of 10⁵ cycles.

The sample during the pressure cycles suffered clearly visible deformations, in particular when exposed to the positive pressure inside the chamber, but instead was more rigid when exposed to negative pressure. During the course of test no worsening of performance was noted and at the end of the test there was no sign of failure.

Therefore the panels according to the invention are also able to withstand satisfactorily the positive and negative pressure stresses which are typical of vehicle traffic inside a tunnel.

### EXAMPLE 4

### Light reflection tests

Three samples of panels obtained according to Example 1 with dimensions of 100 mm x 100 m were subjected to light reflection tests.

The test was carried out as stipulated by the standard ISO 9050:2003 "Glass in building. Determination of light transmittance, direct solar transmittance, total solar energy transmittance and ultraviolet transmittance, and related glazing factor".

The method for measuring the spectral characteristics refers to the recommendations of the standard ASTM E903 - 12 dated 2012 "Standard Test Method for Solar Absorptance, Reflectance, and Transmittance of Materials Using Integrating Spheres".

The test was carried out using a spectrophotometer, Lambda 9 model, made by the company Perkin-Elmer for measurements in the ultraviolet/visible/near infrared spectral ranges, equipped with a 60 mm integrating sphere, model "BO13-9941".

The measurement of the reflection spectrum was carried out using an angle of incidence of 8° and with hemispherical collection by means of an integrating sphere. The diffused reflection sample SRS-99-010 of the company Labsphere was used as reference.

The light reflection factor "ρᵥ" was determined based on the illuminant D65, using the procedure described in standard ISO 9050.

The results of the test are shown in Table 1 below.

**Table 1**

| **Sample No.** | **Light reflection factor "ρᵥ"** |
|---|---|
| 1 | 75.9 |
| 2 | 76.5 |
| 3 | 75.4 |
| **Average** | **75.9** |

As can be noted, the panels according to the invention have a light reflection factor greater than 70% in accordance with that required by the regulations governing panels for the internal cladding of road tunnels.

### EXAMPLE 5

### Corrosion resistance tests

Samples of panels obtained according to Example 1 with dimensions of 200 mm x 200 mm were subjected to salt spray corrosion resistance tests and to humid atmospheres containing sulfur dioxide.

The salt spray test was carried out as stipulated by the standard UNI EN ISO 9227:2017 dated 25/05/2017 "Corrosion tests in artificial atmospheres - Salt spray tests".

The assessments were carried out as stipulated by the following standards:
- UNI EN ISO 4628-2:2016 dated 07/04/2016 "Paints and varnishes. Evaluation of the degradation of coatings - Designation of the quantity and size of defects and the intensity of uniform changes in appearance - Part 2: Assessment of the degree of blistering";
- UNI EN ISO 4628-3:2016 dated 07/04/2016 "Paints and varnishes. Evaluation of the degradation of coatings - Designation of the quantity and size of defects and the intensity of uniform changes in appearance - Part 3: Assessment of the degree of rusting";
- UNI EN ISO 4628-5:2016 dated 07/04/2016 "Paints and varnishes. Evaluation of the degradation of coatings - Designation of the quantity and size of defects and the intensity of uniform changes in appearance - Part 5: Assessment of the degree of flaking".

The sample was exposed inside the chamber to salt spray for accelerated corrosion tests, using the model "Corrotherm 610E" of the company Erichsen Instruments, under the following conditions:
- test solution composed of sodium chloride (in accordance with paragraph 3.1 of the standard UNI EN ISO 9227:2017) in a 5% deionized water solution;
- temperature inside the test chamber of 35 (±2) °C;
- continuous exposure;
- total exposure time of 1500 h;
- angle of inclination of the test surface: 15-30 degrees relative to the perpendicular (or as positioned on-site).

At the end of the exposure time, the sample was extracted from the salt spray chamber, washed with deionized water and dried with compressed air.

Then the sample was examined and the total absence of any blistering, rusting or flaking was noted.

The test for resistance to humid atmospheres containing sulfur dioxide was carried out as stipulated by the standard UNI EN ISO 3231:1999 dated 31/12/1999 "Paints and varnishes - Determination of the resistance to humid atmospheres containing sulfur dioxide" and the assessments were carried out as stipulated by the aforementioned standards UNI EN ISO 4628-2:2016 dated 7/4/2016 and UNI EN ISO 4628-3:2016 dated 7/4/2016 and the standard UNI EN ISO 4628-8:2013 dated 17/1/2013 "Paints and varnishes - Evaluation of the degradation of the coatings - Designation of the quantity and size of the defects and the intensity of uniform changes in appearance - Part 8: Assessment of the degree of flaking and corrosion around an incision or other artificially obtained defect".

The sample underwent exposure tests inside a chamber where there was continuous condensation of moisture (humidity chamber), model "D200" of the company CO.FO.ME.GRA, inside which sulfur dioxide was introduced by means of a flowmeter. The test conditions are shown in Table 2 below.

**Table 2**

| | |
|---|---|
| Temperature of the water for condensation | 45°C |
| Temperature of the water inside the test chamber | 40(±3)°C |
| Sulfur dioxide | 1.01 1 in 3001 equal to 0.33% (v/v) |
| Exposure cycle time | 8 h in test conditions and 16 h in ambient temperature conditions |
| Number of cycles | 20 |

At the end of the exposure time, the sample was extracted from the test chamber, washed and dried and then it was examined, being found to be totally intact without any sign of blistering, rusting and flaking.

Therefore, the panels according to the invention also have a high corrosion resistance.

### EXAMPLE 6

### Fire reaction tests

Samples of panels obtained according to Example 1 were subjected to fire reaction tests as stipulated by the standard UNI EN 13823:2014 dated 11/12/2014.

The samples were initially prepared by exposing them for at least two weeks to a temperature of 23(±2)°C and to a relative humidity of 50(±5)%, as stipulated by the standard EN 13238:2010 dated 10/6/2010. The tests were then carried out, subjecting the samples arranged at a right angle to the flames produced by a burner of 30.7(± 2.0) kW positioned at the corner. The behavior of the samples was assessed during a period of 20 minutes. During the test the following parameters were assessed: heat production, smoke production, lateral spreading of the flame, falling of burning blobs and/or particles.

From the above parameters the following parameters necessary for complete assessment of the behavior of the material in response to the aforementioned test are determined:
- FIGRA_{0.2 MJ} = fire growth rate (THR = 0.2 MJ)
- FIGRA_{0.4 MJ} = fire growth rate (THR = 0.4 MJ)
- LFS_{edge} = lateral spreading of the flames as far as the end of the long section of the sample
- THR₆₀₀ₛ = heat released by the test sample during the first 600 s of the test
- SMOGRA = smoke growth rate
- TSP₆₀₀ₛ = total smoke production of the test sample during the first 600 s of test
- DROP t ≤ 10 s = burning drops/particles lasting not more than 10 s during the first 600 s of the test
- DROP t ≤ 10 s = burning drops/particles lasting more than 10 s during the first 600 s of the test

The results of the test are shown in Table 3 below.

**Table 3**

| **Parameters** | **Average value** |
|---|---|
| FIGRA_{0.2 MJ} [W/s] | 27 |
| FIGRA_{0.4 MJ} [W/s] | 20 |
| LFSedge | LFS < end of the sample |
| THR₆₀₀ₛ [MJ] | 2.6 |
| SMOGRA [m²/s²] | 3 |
| TSP₆₀₀ₛ [m²] | 42 |
| DROP t ≤ 10 s | No burning drops/particles |
| DROP t > 10 s | No burning drops/particles |

The fire reaction performance of the aforementioned samples was classified on the basis of the standard UNI EN 13501-1:2009, receiving the class **A2** for the fire reaction behavior, the additional class **s1** for smoke production and the additional class **d0** for the falling of burning drops/particles.

The above classification results are entirely satisfactory and in accordance with that stipulated by the standards governing the fire reaction performance of panels used for the internal cladding of road tunnels.

### EXAMPLE 7

### Sound absorption tests

A tunnel cladding comprising samples of panels obtained according to Example 1, where the cladding has dimensions of 3600 mm x 3000 mm and a useful acoustic surface area of 10.80 m², underwent sound absorption measurements in an echo room with a volume of 218.8 m³ as stipulated by the standard UNI EN ISO 354:2003 dated 1/12/2003.

The surfaces of the test environment were treated so as to cause maximum sound reverberation and the sample was tested for at least 12 hours inside the test environment.

The measurements were carried out in one-third octave bands in the range of between 100 Hz and 500 Hz with reduced immobility mode and the reverberation times of the empty reverberation chamber and the reverberation chamber containing the sample were measured in order to determine the sound absorption coefficient.

Thus, sound absorption coefficients were determined such that it may be considered that the panels according to the invention are able to achieve a satisfactory or acceptable degree of sound comfort when used for the internal cladding of road tunnels.

## Claims

1. Panel for the internal cladding of tunnels or for the external or internal cladding of buildings comprising a fiber-cement slab and a rear reinforcement in the form of a mineral fiber mesh joined to the rear face of said fiber-cement slab by an adhesive, **characterized in that** said adhesive is applied onto said fiber-cement slab in an amount ranging between 50 g/m² and 150 g/m².

2. Panel according to claim 1, wherein said reinforcement consists of a glass fiber mesh, preferably treated with an anti-alkaline sizing.

3. Panel according to claim 1 or 2, wherein said reinforcement extends along the entire area of said rear face.

4. Panel according to claim 3, wherein said adhesive is a thermoreactive polyurethane-based adhesive.

5. Panel according to any one of the preceding claims, wherein said fiber-cement slab is treated superficially on its front face with a transparent hydrophobic varnish or a transparent varnish or a colored varnish, preferably white in color.

6. Panel according to any one of the preceding claims, wherein said reinforcement mesh has a mesh opening with dimensions ranging between 1-5 mm x 1-5 mm and a surface density of between 0.05 kg/m² and 0.1 kg/m².

7. Panel according to any one of the preceding claims, wherein said adhesive is applied onto said fiber-cement slab in an amount equal to 100 g/m².

8. Process for preparing a panel according to any one of the preceding claims, comprising the steps of:
- providing a fiber-cement slab,
- applying with heat a thermoreactive adhesive onto the rear face of the fiber-cement slab,
- applying a mineral fiber mesh onto said rear face, in use of the fiber-cement slab on which the adhesive has been applied with heat, and
- gluing said mineral fiber mesh to said rear face of the fiber-cement slab,
**characterized in that** said adhesive is applied onto said fiber-cement slab in an amount ranging between 50 g/m² and 150 g/m², in particular 100 g/m².

9. Process according to claim 8, wherein said application of the adhesive is carried out by passing said fiber-cement slab under a heated roller at a temperature such as to melt the adhesive and wherein said gluing is carried out or completed by compressing said fiber-cement slab and said mineral fiber mesh together with the adhesive placed between them, preferably by passing them through a pair of oppositely arranged rollers.

## Patentansprüche

1. Platte für die Innenverkleidung von Tunneln oder für die Außen- oder Innenverkleidung von Gebäuden, umfassend eine Faserzementplatte und eine rückseitige Verstärkung in Form eines Mineralfasernetzes, das an der Rückseite der Faserzementplatte durch einen Klebstoff befestigt ist, **dadurch gekennzeichnet, dass** der Klebstoff auf die Faserzementplatte in einer Menge zwischen 50 g/m² und 150 g/m² aufgebracht ist.

2. Platte nach Anspruch 1, wobei die Verstärkung aus einem Glasfasernetz besteht, das vorzugsweise mit einer antialkalischen Schlichte behandelt ist.

3. Platte nach Anspruch 1 oder 2, wobei sich die Verstärkung über die gesamte Fläche der Rückseite erstreckt.

4. Platte nach Anspruch 3, wobei der Klebstoff ein thermoreaktiver Klebstoff auf Polyurethanbasis ist.

5. Platte nach einem der vorhergehenden Ansprüche, wobei die Faserzementplatte auf ihrer Vorderseite oberflächlich mit einem transparenten hydrophoben Lack oder einem transparenten Lack oder einem farbigen Lack, vorzugsweise in weißer Farbe, behandelt ist.

6. Platte nach einem der vorhergehenden Ansprüche, wobei das Verstärkungsnetz eine Maschenöffnung mit Abmessungen zwischen 1-5 mm x 1-5 mm und eine Oberflächendichte zwischen 0,05 kg/m² und 0,1 kg/m² aufweist.

7. Platte nach einem der vorhergehenden Ansprüche, wobei der Klebstoff in einer Menge von 100 g/m² auf die Faserzementplatte aufgetragen ist.

8. Verfahren zur Herstellung einer Platte nach einem der vorhergehenden Ansprüche, umfassend die Schritte:
- Bereitstellen einer Faserzementplatte,
- Aufbringen eines thermoreaktiven Klebstoffs auf die Rückseite der Faserzementplatte durch Wärme,
- Aufbringen eines Mineralfasernetzes auf die Rückseite bei Verwendung der Faserzementplatte, auf die der Klebstoff mit Wärme aufgebracht wurde, und
- Verkleben des Mineralfasernetzes mit der Rückseite der Faserzementplatte, **dadurch gekennzeichnet, dass** der Klebstoff auf die Faserzementplatte in einer Menge zwischen 50 g/m² und 150 g/m², insbesondere 100 g/m², aufgetragen wird.

9. Verfahren nach Anspruch 8, wobei das Auftragen des Klebstoffs durchgeführt wird, indem die Faserzementplatte unter einer beheizten Walze mit einer solchen Temperatur hindurchgeführt wird, dass der Klebstoff schmilzt, und wobei das Verkleben durchgeführt oder abgeschlossen wird, indem die Faserzementplatte und das Mineralfasernetz zusammen mit dem dazwischen angeordneten Klebstoff zusammengedrückt werden, vorzugsweise indem sie durch ein Paar gegenüberliegend angeordneter Walzen geführt werden.

## Revendications

1. Panneau pour le bardage interne de tunnels ou pour le bardage externe ou interne de bâtiments comprenant une plaque de fibrociment et un renforcement arrière sous la forme d'un treillis en fibre minérale lié sur la face arrière de ladite plaque de fibrociment par un adhésif, **caractérisé en ce que** ledit adhésif est appliqué sur ladite plaque de fibrociment dans une quantité comprise entre 50 g/m² et 150 g/m².

2. Panneau selon la revendication 1, dans lequel ledit renforcement consiste en un treillis en fibre de verre, de préférence traité avec un ensimage anti-alcalin.

3. Panneau selon la revendication 1 ou 2, dans lequel ledit renforcement s'étend le long de toute la zone de ladite face arrière.

4. Panneau selon la revendication 3, dans lequel ledit adhésif est une colle thermo-réactive à base de polyuréthanne.

5. Panneau selon l'une quelconque des revendications précédentes, dans lequel ladite plaque de fibrociment est traitée de manière superficielle sur sa face avant avec un vernis hydrophobe transparent ou un vernis transparent ou un vernis coloré, de préférence de couleur blanche.

6. Panneau selon l'une quelconque des revendications précédentes, dans lequel ledit treillis de renforcement présente une ouverture de maille avec des dimensions comprises dans la plage de 1 à 5 mm x 1 à 5 mm et une densité de surface comprise entre 0,05 kg/m² et 0,1 kg/m².

7. Panneau selon l'une quelconque des revendications précédentes, dans lequel ledit adhésif est appliqué sur ladite plaque de fibrociment dans une quantité égale à 100 g/m².

8. Procédé pour préparer un panneau selon l'une quelconque des revendications précédentes, comprenant les étapes de :
- fourniture d'une plaque de fibrociment,
- application par la chaleur d'un adhésif thermo-réactif sur la face arrière de la plaque de fibrociment,
- application d'un treillis en fibre minérale sur ladite face arrière, pendant l'utilisation de la plaque de fibrociment sur laquelle l'adhésif a été appliqué par la chaleur, et
- collage dudit treillis en fibre minérale sur ladite face arrière de la plaque de fibrociment,
**caractérisé en ce que** ledit adhésif est appliqué sur ladite plaque de fibrociment dans une quantité comprise entre 50 g/m² et 150 g/m², en particulier 100 g/m².

9. Procédé selon la revendication 8, dans lequel ladite application de l'adhésif est réalisée en faisant passer ladite plaque de fibrociment sous un rouleau chauffé à une température de manière à faire fondre l'adhésif et dans lequel ledit collage est réalisé ou complété par compression de ladite plaque de fibrociment et dudit treillis en fibre minérale ensemble avec l'adhésif placée entre ceux-ci, de préférence en les faisant passer à travers une paire de rouleaux agencés de manière opposée.
